# EUROPÄISCHE PATENTANMELDUNG

(11) **EP 1 433 929 A2**
(43) Veröffentlichungstag der Anmeldung: **30.06.2004**
(21) Anmeldenummer: 03016990.8
(22) Anmeldetag: 25.07.2003
(51) Int. Cl.: F01D 13/02, F01D 17/00, F01D 17/04, F02C 9/18, F02C 9/16, F04D 15/00, F04D 27/00

(54) **Strömungsmaschinenanordnung**

(30) Priorität: 23.12.2002 DE 10261790
(71) Anmelder: ROBERT BOSCH GMBH, 70442 Stuttgart (DE)
(72) Erfinder: Winkler, Gunter, 70176 Stuttgart (DE); Janetzky, Bjoern, 71254 Ditzingen (DE)

(57) **Zusammenfassung**

Die Erfindung betrifft eine Strömungsmaschinenanordnung mit zwei über eine gemeinsame Welle gekoppelte Verdichter- oder Turbinenstufen, die in Abhängigkeit eines durch die Anordnung passierenden Fluidvolumenstroms zumindest in einer zweistufigen oder zweiflutigen Anordnung betreibbar sind.

## Beschreibung

Die Erfindung betrifft eine Strömungsmaschinenanordnung mit den im Patentanspruch 1 genannten Merkmalen.

### Stand der Technik

Strömungsmaschinen können einen externen Antrieb aufweisen und als Verdichter arbeiten. Turbinen entziehen hingegen einem Fluidvolumenstrom mechanische Energie und dienen zum Antrieb einer Welle. Sowohl Verdichter als auch Turbinen haben ein nach oben und unten begrenztes Arbeitskennfeld. D.h., wird bspw. ein Verdichter mit einem zu geringen Fluidvolumen- bzw. Massenstrom beaufschlagt, neigt er zum sog. Pumpen. Stromaufwärts und stromabwärts der Laufräder der Verdichter- oder Turbinenstufen angeordnete Leiteinrichtungen dienen zur Verschiebung der Kennfeldgrenzen. Bei verstellbaren Leiteinrichtungen können die Kennfelder über einen noch größeren Bereich verschoben werden als mit starren Leiteinrichtungen.

Stellglieder jeglicher Art erhöhen jedoch den Strömungswiderstand bzw. den Druckverlust zwischen Einund Austritt der Komponente. Letztlich wird der Wirkungsgrad an extremalen Punkten im Kennfeld von nicht akzeptablen Werten auf wirtschaftlich tolerierbare Werte angehoben. Damit einher gehen allerdings Wirkungsgradverluste im mittleren Bereich der Kennfelder.

Eine an kleinere Volumenströme besser angepasste Strömungsmaschinenanordnung kann bspw. mehrere Stufen vorsehen, die in seriellem Betrieb arbeiten. Aus der US 63 24 848 B1 sowie aus der EP 1 191 208 A2 sind zweistufige Verdichteranordnungen bekannt, deren Verdichterstufen mittels schaltbaren Ventilen und Bypassanordnungen variabel miteinander verschaltet werden können, um damit das sog. Pumpen der einzelnen Stufen zu vermeiden.

### Vorteile der Erfindung

Eine erfindungsgemäße Strömungsmaschinenanordnung sieht zwei über eine gemeinsame Welle miteinander gekoppelte Verdichter- oder Turbinenstufen vor, die in Abhängigkeit eines durch die Anordnung passierenden Fluidvolumenstroms zumindest in einer zweistufigen oder in einer zweiflutigen Anordnung betreibbar sind. Je nach Massen- oder Volumenstrom ist somit ein zweiflutiger oder zweistufiger Betrieb möglich, wodurch die Anordnung einen höheren Wirkungsgrad aufweisen kann als eine einzige Verdichter- oder Turbinenstufe, die mit starren oder variablen Leiteinrichtungen versehen ist.

Eine Ausgestaltung der Erfindung sieht vor, dass zwischen einem Einlasskanal und einem Auslasskanal der Strömungsmaschinenanordnung ein verschwenk- oder verschiebbares Steuerelement angeordnet ist. Das Steuerelement fungiert als Mehrwegeventil und kann für eine Umschaltung zwischen dem zweiflutigen und dem zweistufigen Betrieb sorgen.

Bei einer Ausgestaltung der Erfindung ist in der zweistufigen Anordnung ein Zuströmkanal der ersten Verdichter- oder Turbinenstufe mit dem Einlasskanal verbunden. Der Abströmkanal der ersten Verdichterstufe ist mit einem Zuströmkanal der zweiten Verdichterstufe verbunden, während deren Abströmkanal mit dem Auslasskanal der Strömungsmaschinenanordnung verbunden ist. Dem entsprechend sind in der zweiflutigen Anordnung die Zuströmkanäle der ersten und der zweiten Verdichter- oder Turbinenstufe mit dem Einlasskanal verbunden, während die Abströmkanäle mit dem Auslasskanal der Strömungsmaschinenanordnung verbunden sind. Das als Mehrwegeventil wirkende Steuerelement ermöglicht eine sehr kompakte Bauform der erfindungsgemäßen Strömungsmaschinenanordnung sowie deren Beschaltung von außen.

In einer Bypassanordnung ist der Einlasskanal mit dem Auslasskanal der Strömungsmaschinenanordnung verbunden. Die zusätzliche Bypassstellung des Steuerelements sorgt dafür, dass je nach Betriebsbedingungen ein Teil oder gesamte Fluidvolumenstrom an den Verdichter- oder Turbinenstufen vorbei geleitet werden kann.

Das Steuerelement kann insbesondere ein verschwenkbares Steuersegment umfassen. Das Steuerelement kann insbesondere Teil eines Steuerrings sein, der in einer ringförmigen Kulisse verschwenkbar ist.

Der Steuerring kann bspw. mittels eines Schneckenradantriebs verschwenkt werden. Vorzugsweise ist der Steuerring hierzu mit einer Außenverzahnung versehen, die mit einer Schneckenradwelle eines Stellelements zusammen wirkt. Das Stellelement kann insbesondere ein elektrischer Stellmotor sein, der seine Stellsignale von einer zentralen Steuereinheit erhält. Ein elektrischer Stellmotor kann für sehr schnelle Schwenkbewegungen des Steuerrings und damit für sehr kurze Ansprechzeiten der Anordnung je nach sich ändernden Betriebsbedingungen sorgen.

Die erfindungsgemäße Strömungsmaschinenanordnung ermöglicht eine Umschaltbarkeit der Anordnung zwischen dem zweiflutigen, dem zweistufigen und dem Bypassbetrieb in Abhängigkeit eines Fluidvolumenstroms. Insbesondere bei einer Verwendung als elektrischer Zusatzverdichter zur Verkürzung des Ansprechverhaltens einer Brennkraftmaschine mit Abgasturbolader kann die wahlweise Umschaltung zwischen dem zweistufigen und dem zweiflutigen Betrieb für sehr kurze Ansprechzeiten und für eine deutliche Wirkungsgradverbesserung der Brennkraftmaschine sorgen.

Weitere vorteilhafte Ausgestaltungen der Erfindung ergeben sich aus den übrigen, in den abhängigen Ansprüchen genannten Merkmalen.

### Zeichnungen

Die Erfindung wird nachfolgend in bevorzugten Ausführungsbeispielen anhand der zugehörigen Zeichnungen näher erläutert. Dabei zeigt:
- Figur 1: ein Prinzipschaltbild einer erfindungsgemäßen Strömungsmaschinenanordnung,
- Figur 2: ein qualitatives Diagramm zur Verdeutlichung eines Zusammenhangs zwischen Massenstrom und Druckverhältnissen bei zweiflutigem und zweistufigem Betrieb,
- Figur 3: ein schematischer Querschnitt einer Verdichteranordnung,
- Figur 4: ein schematischer Längsschnitt einer erfindungsgemäßen Anordnung,
- Figuren 5, 6a und 7a: perspektivische Darstellungen eines Steuerrings,
- Figur 6b, 7b und 8: verschiedene Schaltstellungen des Steuerrings in schematischen Querschnittdarstellungen.

### Beschreibung der Ausführungsbeispiele

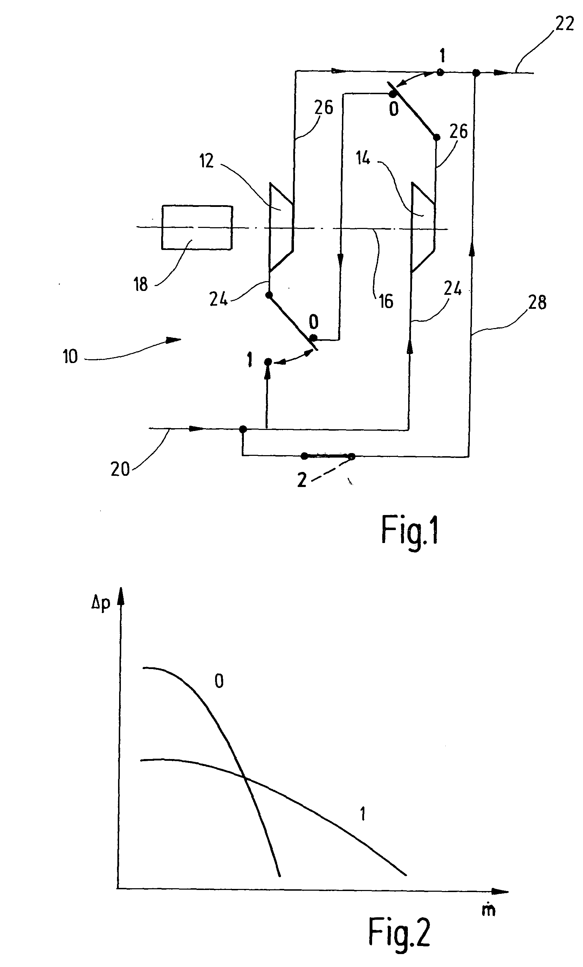

Figur 1 verdeutlicht ein Prinzipschaltbild einer erfindungsgemäßen Strömungsmaschinenanordnung 10, die im gezeigten Ausführungsbeispiel zwei Verdichterstufen 12 und 14 umfasst, deren Laufräder über eine gemeinsame Antriebswelle 16 miteinander gekoppelt sind. Die Antriebswelle 16 wird von einem Antriebsmotor 18, insbesondere von einem elektrischen Motor angetrieben. Die Strömungsmaschinenanordnung 10 kann wahlweise in einer zweistufigen oder in einer zweiflutigen Anordnung betrieben werden.

Die in Figur 1 gezeigte Schaltstellung "0" verdeutlicht hierbei die zweistufige Anordnung, bei der die beiden Verdichterstufen 12 und 14 in serieller Anordnung miteinander verschaltet sind. Dabei ist ein Einlasskanal 20 der Anordnung 10 mit einem Zuströmkanal 24 der zweiten Verdichterstufe 14 verbunden. Deren Abströmkanal 26 ist mit einem Zuströmkanal 24 der ersten Verdichterstufe 12 verbunden, deren Abströmkanal 26 mit einem Auslasskanal 22 der Strömungsmaschinenanordnung 10 verbunden ist. In der Schaltstellung "0" ist die Anordnung in der Lage, ein hohes Druckverhältnis bei geringem Volumenstrom zu erzeugen, was durch die Kurve "0" der Figur 2 verdeutlicht wird.

Bei der alternativen Schaltstellung "1" hingegen sind beide Zuströmkanäle 24 der beiden Verdichterstufen 12 und 14 jeweils mit dem Einlasskanal 20 verbunden, während ihre Abströmkanäle 26 jeweils mit dem Auslasskanal 22 verbunden sind. Die Anordnung arbeitet im zweiflutigen Betrieb und ist somit in der Lage, ein geringes Druckverhältnis bei hohem Massenstrom zu erzeugen, was durch die Kurve "1" der Figur 2 verdeutlicht wird.

Eine weitere Schaltstellung "2" sieht eine variabel öffenbare Verbindung des Einlasskanals 20 über eine Bypassleitung 28 mit dem Auslasskanal 22 vor. Die Bypassleitung 28 kann insbesondere zum schnellen Druckabbau oder bei zu hohem Differenzdruck zwischen Einlasskanal 20 und Auslasskanal 22 geöffnet werden.

Die zweistufige oder zweiflutige Verdichteranordnung kann insbesondere ein elektrisch betreibbarer Zusatzverdichter einer Brennkraftmaschine sein, der in Serie zu einer Verdichterstufe eines Abgasturboladers geschaltet ist, um dessen Kennfeld bei niedrigen Drehzahlen nach unten zu erweitern. Hierbei strömt von einem Luftfilter kommende Luft in den Einlasskanal 20. Die aus dem Auslasskanal 22 geförderte, verdichtete Luft wird anschließend zur Verdichterstufe des Abgasturboladers geleitet. Dessen Ansprechverhalten kann mit der erfindungsgemäßen Anordnung deutlich verbessert werden, so dass ein sog. "Turboloch" völlig eliminiert werden kann.

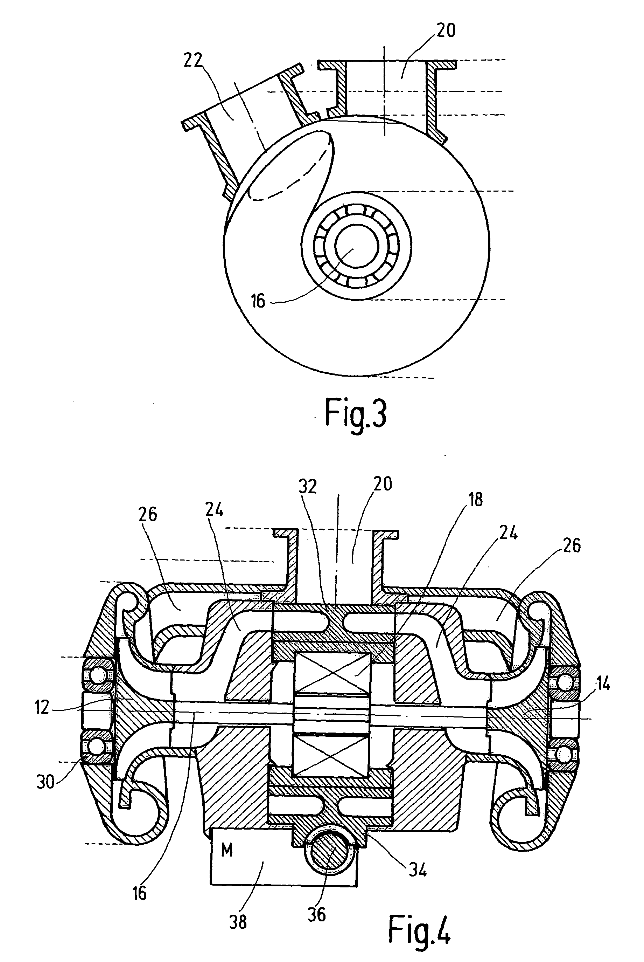

Figur 3 zeigt eine Seitenansicht eines Ausführungsbeispiels der erfindungsgemäßen Strömungsmaschinenanordnung 10, bei der der Einlass- 20 und der Auslasskanal 22 jeweils in einer Schnittebene dargestellt sind.

Figur 4 zeigt einen Längsschnitt der Anordnung gemäß Figuren 1 und 3, wobei in dieser Schnittebene nur der Einlasskanal 20 erkennbar ist. Die gemeinsame Antriebswelle 16 wird vom mittig zwischen den beiden Verdichterstufen 12 und 14 angeordneten elektrischen Antriebsmotor 18 betrieben. Die Laufräder der Verdichterstufen 12, 14 sitzen jeweils an den Wellenenden, die außerhalb der Laufräder jeweils in einem Wellenlager 30 gelagert sind.

In einer gemeinsamen radialen Ebene mit dem Einlasskanal 20 und dem Auslasskanal 22 ist ein, in gleicher Ebene radial verschwenkbarer Steuerring 32 angeordnet, mit dessen Hilfe die Anordnung zwischen dem zweistufigen, dem zweiflutigen und dem Bypassbetrieb umgeschaltet werden kann. Der Steuerring 32 weist eine Außenverzahnung 34 auf, die mit einem Schneckenrad 36 zusammenwirkt, deren Schneckenradwelle mittels eines Stellmotors 38 gedreht werden kann. Der Stellmotor 38 kann insbesondere als elektrischer Antrieb ausgestaltet sein, der zur variablen Verstellung des Steuerrings 32 dient. Dieser fungiert somit als Mehrwegeventil zur variablen Beschaltung der Zuström- und Abströmkanäle 24, 26 der Verdichterstufen 12, 14.

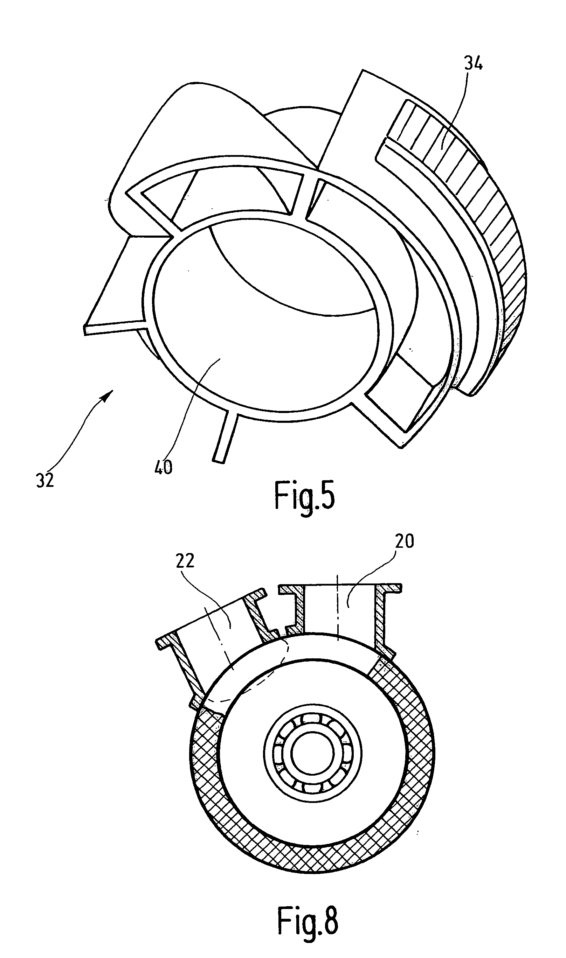

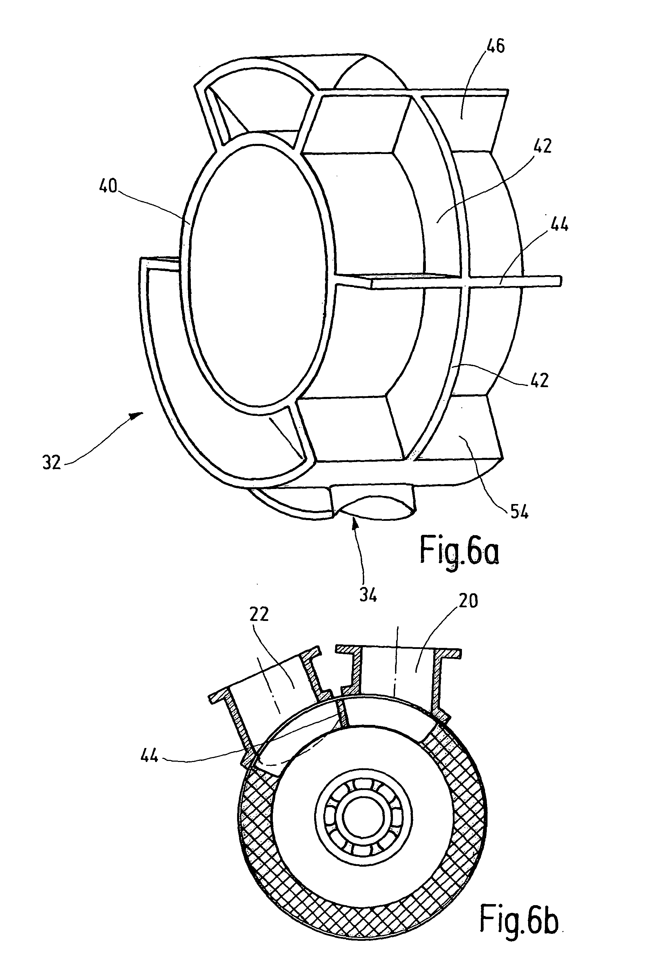

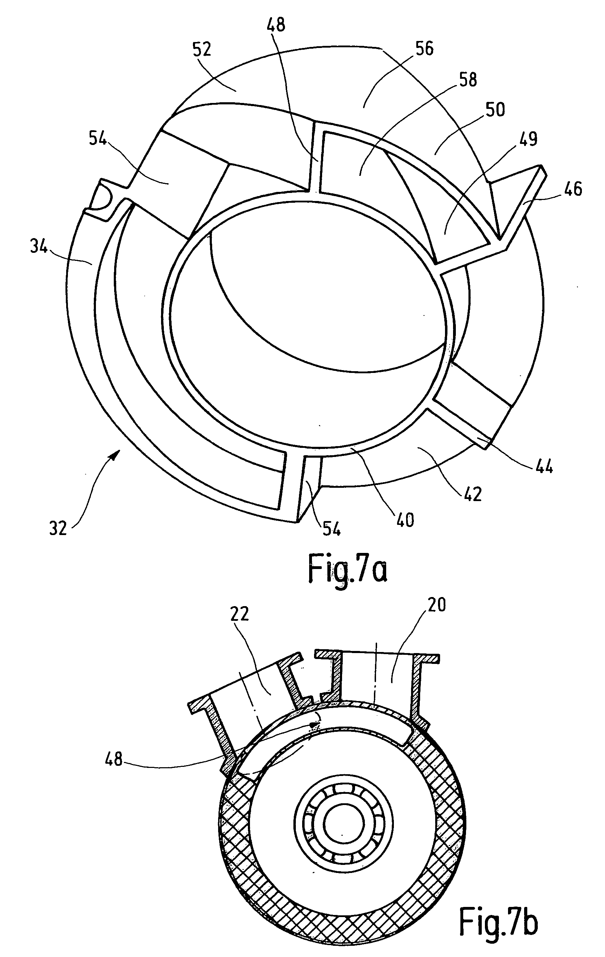

Figur 5 verdeutlicht die Gestaltung des Steuerrings 32, dessen Schneckenrad 34 sich über ein Winkelsegment seines Außenumfangs erstreckt, das für einen ausreichenden Stellweg zwischen der parallelen (Figur 6) und der seriellen Anordnung (Figur 7) genügt. Der Steuerring 32 weist einen inneren hohlzylindrischen Abschnitt 40 auf, der vorzugsweise zur Gleitlagerung des Steuerrings 32 auf einem Gehäuseabschnitt um den Antriebsmotor 18 dient.

Figur 6a verdeutlicht einen Teil des Außenumfangs des Steuerrings 32, der den Einlasskanal 20 mit dem Auslasskanal 22 im zweiflutigen Betrieb verschaltet. Ein Längssteg 42 sowie ein erster und zweiter Quersteg 44 und 46 reichen jeweils vom hohlzylindrischen inneren Abschnitt 40 bis zum Außenumfang des Steuerrings 32 sowie dessen ringförmigem Sitzkanal im Gehäuse. In seiner Stellung "1" für den zweiflutigen Betrieb liegt der erste Quersteg 44 zwischen dem Einlass- 20 und dem Auslasskanal 22 (vgl. Figur 6b) und verhindert eine direkte Verbindung zwischen diesen. Der Längssteg 42 sorgt dafür, dass beide Einströmkanäle 24 der Verdichterstufen 12 und 14 gleichermaßen beaufschlagt werden und dass beide Ausströmkanäle 26 wieder im Auslasskanal 22 zusammen geführt werden.

Der mittig entlang des Außenumfangs verlaufende Längssteg 42 und der mittig am Längssteg 42 angeordnete erste Quersteg 44 unterteilen den Steuerraum zwischen Innenkanten der Kanäle 20 und 22 und dem hohlzylindrischen Abschnitt 40 in vier gleich große Teile, die jeweils zur Aufteilung des Einlassstroms bzw. zur Zusammenführung des Auslassstroms dienen. Der Winkelbereich zwischen dem geschlossenen Segment mit dem daran angeordneten Außengewinde 34 und dem zweiten Quersteg 46 ist vorzugsweise mindestens so breit wie die am weitesten voneinander entfernten Kanten der Kanäle 20 und 22 (vgl. Figur 6b).

Figur 7a verdeutlicht einen Teil des Außenumfangs des Steuerrings 32, der den Einlasskanal 20 mit dem Auslasskanal 22 im zweistufigen Betrieb verschaltet. In seiner Stellung "0" für den zweistufigen Betrieb verlaufen Dichtsegmente zwischen dem Einlass- 20 und dem Auslasskanal 22 (vgl. Figur 7b) und verhindern eine direkte Verbindung zwischen diesen. Anstatt eines einzigen radial verlaufenden Längssteges sind hier zwei diagonal verlaufende dritte und vierte Längsstege 48 und 49 vorgesehen, deren radiale Außenkanten mit einer Deckfläche 56 verbunden sind, so dass zwischen hohlzylindrischem Abschnitt 40, drittem Längssteg 48, viertem Längssteg 49 und Deckfläche 56 ein diagonal verlaufender Verbindungskanal 58 gebildet ist. Dieser verbindet den Abströmkanal 26 der zweiten Verdichterstufe 14 mit dem Zuströmkanal 24 der ersten Verdichterstufe 12, so dass diese im zweistufigen Betrieb arbeiten.

Außerhalb des Kanals 58 sorgen die dreieckförmigen Freiflächen dafür, dass der Einlasskanal 20 mit dem Zuströmkanal 24 der zweiten Verdichterstufe 14 verbunden ist, und dass der Abströmkanal 26 der ersten Verdichterstufe 12 mit dem Auslasskanal 22 verbunden ist.

Beim Bypassbetrieb "2" befindet sich der erste Quersteg 44 nicht zwischen Einlass- 20 und Auslasskanal 22, sondern in einer Zwischenstellung, so dass diese zumindest teilweise direkt miteinander verbunden sind. Diese Stellung des Steuerrings 32 ist in Figur 8 angedeutet.

Die gezeigte Umschaltbarkeit der Strömungsmaschinenanordnung 10 eignet sich sowohl für zwei über eine gemeinsame Welle gekoppelte Verdichterstufen wie auch für zwei miteinander gekoppelte Turbinenstufen. Bei beiden Anwendungsfällen können die Verdichter bzw. Turbinen wahlweise in Serie oder parallel betrieben werden, um bei einem geringen Massenstrom ein großes Druckverhältnis oder bei großem Massenstrom ein geringeres Druckverhältnis aufbauen zu können.

## Patentansprüche

1. Strömungsmaschinenanordnung mit zwei über eine gemeinsame Welle gekoppelte Verdichter- oder Turbinenstufen, die in Abhängigkeit eines durch die Anordnung passierenden Fluidvolumenstroms zumindest in einer zweistufigen oder zweiflutigen Anordnung betreibbar sind.

2. Strömungsmaschinenanordnung nach Anspruch 1, **dadurch gekennzeichnet, dass** zwischen einem Einlasskanal (20) und einem Auslasskanal (22) der Strömungsmaschinenanordnung (10) ein verschwenk- oder verschiebbares Steuerelement angeordnet ist.

3. Strömungsmaschinenanordnung nach Anspruch 1 oder 2, **dadurch gekennzeichnet, dass** in der zweistufigen Anordnung ein Zuströmkanal (24) der ersten Verdichter- (12) oder Turbinenstufe mit dem Einlasskanal (20) verbunden, dass deren Abströmkanal (26) mit einem Zuströmkanal (24) der zweiten Verdichter- (14) oder Turbinenstufe und dass deren Abströmkanal (26) mit dem Auslasskanal (22) der Strömungsmaschinenanordnung (10) verbunden ist.

4. Strömungsmaschinenanordnung nach einem der Ansprüche 1 bis 3, **dadurch gekennzeichnet, dass** in der zweiflutigen Anordnung die Zuströmkanäle (24) der ersten und der zweiten Verdichter- (12, 14) oder Turbinenstufe mit dem Einlasskanal (20) verbunden sind, und dass deren Abströmkanäle (26) mit dem Auslasskanal (22) der Strömungsmaschinenanordnung (10) verbunden sind.

5. Strömungsmaschinenanordnung nach einem der Ansprüche 1 bis 4, **dadurch gekennzeichnet, dass** in einer Bypassanordnung der Einlasskanal (20) mit dem Auslasskanal (22) der Strömungsmaschinenanordnung (10) verbunden ist.

6. Strömungsmaschinenanordnung nach einem der Ansprüche 2 bis 5, **dadurch gekennzeichnet, dass** das Steuerelement ein verschwenkbares Steuersegment umfasst.

7. Strömungsmaschinenanordnung nach einem der Ansprüche 2 bis 6, **dadurch gekennzeichnet, dass** das Steuerelement Teil eines, in einer ringförmigen Kulisse verschwenkbaren Steuerrings (32) ist.

8. Strömungsmaschinenanordnung nach einem der voranstehenden Ansprüche, **dadurch gekennzeichnet, dass** der Einlasskanal (20) und der Auslasskanal (22) der Strömungsmaschinenanordnung (10) und das verschwenkbare Steuersegment innerhalb einer radialen Ebene angeordnet sind.

9. Strömungsmaschinenanordnung nach einem der voranstehenden Ansprüche, **dadurch gekennzeichnet, dass** das Steuersegment bzw. der Steuerring (32) mittels eines Schneckenradantriebs verschwenkbar ist.

10. Strömungsmaschinenanordnung nach Anspruch 9,
**dadurch gekennzeichnet, dass** das Steuersegment bzw. der Steuerring (32) eines Außenverzahnung (34) aufweist, die mit einer Schneckenradwelle eines Stellelements zusammen wirkt.

11. Strömungsmaschinenanordnung nach einem der voranstehenden Ansprüche, **dadurch gekennzeichnet, dass** die Anordnung (10) zwischen dem zweiflutigen, dem zweistufigen und dem Bypassbetrieb in Abhängigkeit eines Fluidvolumenstroms umschaltbar ist.
